## Europäisches Patentamt

## European Patent Office

## Office européen des brevets

(19)

(11) Veröffentlichungsnummer: **0 264 062**

**A1**

(12) **EUROPÄISCHE PATENTANMELDUNG**

(21) Anmeldenummer: 87114671.8

(22) Anmeldetag: 08.10.87

(51) Int. Cl.⁴ **B29C 47/88** , B29C 55/28 , B29D 7/01 , //B29L7:00

(30) Priorität: 09.10.86 DE 3627129

(43) Veröffentlichungstag der Anmeldung:
20.04.88 Patentblatt 88/16

(84) Benannte Vertragsstaaten:
AT BE CH ES FR GB IT LI LU NL SE

(71) Anmelder: Planex Projektierungs-GmbH
Wachenheimerstrasse 21
D-6520 Worms(DE)

(72) Erfinder: Beck, Erich, Dipl.-Ing.(FH)
Wachenheimerstrasse 21
D-6520 Worms(DE)

(74) Vertreter: Konle, Tilmar, Dipl.-Ing.
Benderstrasse 23a
D-8000 München 60(DE)

(54) Vorrichtung zur Feinkorrektur des Dickenprofils bei der Blasfolienherstellung.

(57) Bei der Blasfolienherstellung mittels einer ringförmigen Düse benutzt man üblicherweise zur Abkühlung der Folienblase einen Luftkühlring (2). Um das Dickenprofil feinkorrigieren zu können, wird eine Anordnung einer Vielzahl von Stiften (3) nahe des Luftaustrittes vorgeschlagen, welche in engen Abständen am Umfang der ringförmigen Düse verteilt sind. Die Stifte (3) können einzeln stufenlos verstellbar in den Luftstrom eingeführt und in ihrer jeweiligen Lage fixiert werden. Zusätzlich kann die Steuerung der Stifteinstellung automatisch durch Abtasten des fortlaufend aufgezeichneten transversalen Dickenprofils und durch elektronisch-motorischen Antrieb der einzelnen Stifte erfolgen.

Fig. 7

EP 0 264 062 A1

Die Aufgabe der Erfindung besteht somit in einer Steuerung der azimutalen Luftgeschwindigkeitsverteilung in engen Sektoren zum Zwecke der Feinkorrektur von Dickenprofilen bei der Blasfolienherstellung und damit einer deutlichen Verbesserung der transversalen Dickentoleranzen.

Zur Lösung dieser Aufgabe werden erfindungsgemäß die Merkmale des kennzeichnenden Teils des Patentanspruchs 1 in Verbindung mit dessen Oberbegriff vorgeschlagen.

In vorteilhafter Weise sind die am Umfang der ringförmigen Düse verteilten Störkörper (Stifte) gemäß Patentanspruch 2 in der Höhe verstellbar. Nach Vorlage eines Dickenprofils werden die in der Nähe des Luftaustritts am Kühlring eingesetzten Störkörper jeweils auf dem Radialstrahl der Profilspitzen je nach Ausmaß der Plusabweichung in den Luftstrom eingeschoben. Mit Hilfe einer fortlaufenden Messung und Aufzeichnung des transversalen Dickenprofils kann die Feinkorrektur auch über elektronisch gesteuerte motorische Stellglieder für die einzelnen Steuerelemente bzw. Stifte automatisch ausgeführt werden, wie in Patentanspruch 3 festgelegt ist.

Mit der erfindungsgemäßen Vorrichtung kann somit Profilspitzen durch gezielte Einbringung von in der Höhe verstellbaren Störkörpern in der Nähe des Luftaustritts dadurch entgegengewirkt werden, daß auf dem Radialstrahl, auf dem sich der Störkörper befindet, eine am Blasenumfang sprunghafte Verringerung der Luftgeschwindigkeit eintritt und dadurch auf einem schmalen Bereich des Blasenumfangs durch stärkere Dehnung eine Dickenverminderung eintritt. Auf diese Weise läßt sich der an sich bekannte Effekt ausnutzen ( sh. P. Pleske, Schlauchfolienkühlung, Zeitschrift "Kunststoffe" 69 (1979)4, S. 208-214 ), wonach durch Einbringung verschieden großer Störkörper ein unterschiedlicher Geschwindigkeitsabfall und damit eine partiale Dickenverminderung in engen Bereichen eintritt.

Ein Ausführungsbeispiel der erfindungsgemäßen Vorrichtung wird anhand der Zeichnungen näher erläutert. Es zeigt:

Fig. 1 einen schematischen Schnitt durch einen nahe des Luftaustritts eines Luftkühlrings angeordneten Störkörper, und

Fig. 2 eine teilweise Draufsicht auf einen Kühlring mit in engen Abständen am Umfang der ringförmigen Luftaustrittsdüse angeordneten Störkörpern.

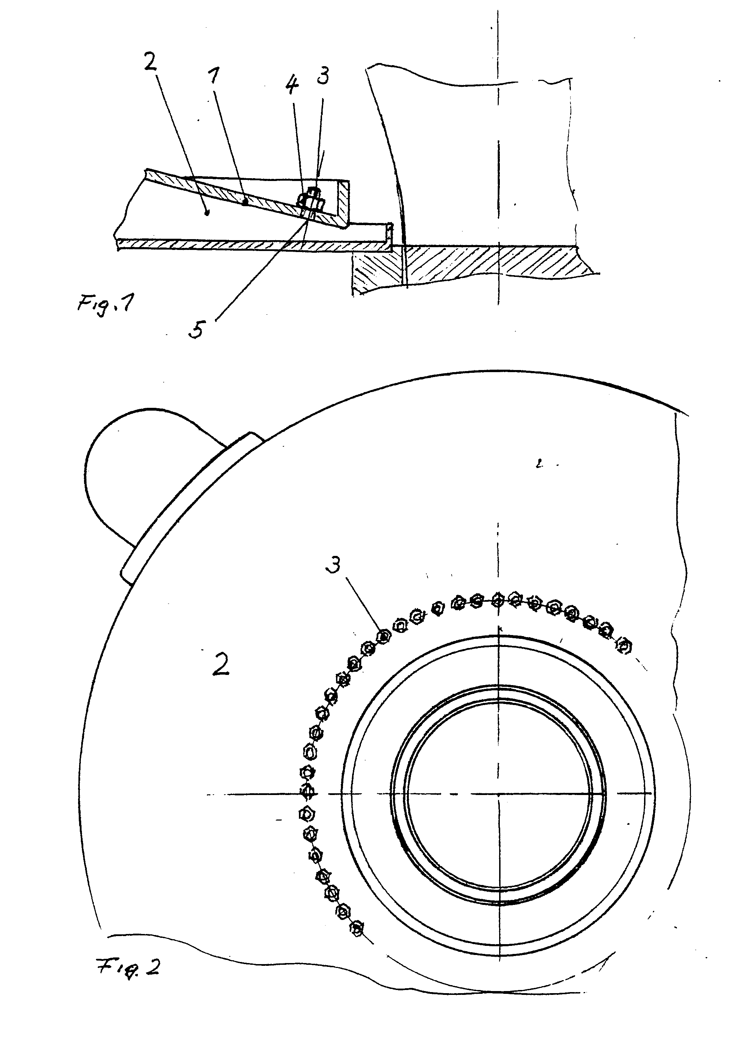

Wie aus der schematischen Darstellung gemäß Fig. 1 ersichtlich ist, sind in der Leitwand 1 eines Luftkühlringes 2 Störkörper in Form von Stiften 3 beliebigen Querschnitts, vorzugsweise zylindrisch, oder Gewindestifte eingesetzt und mit Kontermuttern 4 festgezogen.

In der gezeigten Ausgangsposition verlaufen die Stirnflächen 5 der Stifte 3 bündig bezüglich der Innenfläche der Leitwand 1. Durch Lösen der Kontermutter 4 kann der Stift 3 mehr oder weniger in den Luftstrom eingeschoben und durch Festziehen der Kontermutter 4 in seiner Lage fixiert werden.

Aus der Draufsicht gemäß Fig. 2 des Luftkühlringes 2 sind die in engen Abständen angeordneten Stifte 3 erkennbar.

## Ansprüche

1. Vorrichtung zur Feinkorrektur des Dickenprofils bei der Blasfolienherstellung mittels einer ringförmigen Düse mit einem Luftkühlring (2) zur Abkühlung der Folienblase, **gekennzeichnet** durch die Anordnung einer Vielzahl von Stiften (3) nahe des Luftaustritts, die in engen Abständen am Umfang der ringförmigen Düse verteilt sind.

2. Vorrichtung nach Anspruch 1, dadurch **gekennzeichnet,** daß die am Düsenumfang verteilten Stifte (3) einzeln stufenlos verstellbar in den Luftstrom eingeführt und in ihrer jeweiligen Lage fixiert werden können.

3. Vorrichtung nach Anspruch 1 und 2, dadurch **gekennzeichnet,** daß die Steuerung der Stifteinstellung automatisch durch Abtasten des fortlaufend aufgezeichneten transversalen Dickenprofils und durch elektronisch-motorischen Antrieb der einzelnen Stifte (3) erfolgt.

Fig.1

Fig.2

| | **EINSCHLÄGIGE DOKUMENTE** | | EP 87114671.8 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | US - A - 4 209 475 (HERRINGTON) <br> * Gesamt * <br><br> -- | | B 29 C 47/88 <br> B 29 C 55/28 <br> B 29 D 7/01 <br> //B 29 L 7:00 |
| A | DE - A1 - 2 947 293 (WINDMÖLLER & HOLSCHER) <br> * Gesamt * <br><br> -- | | |
| A | DE - A1 - 2 658 518 (REIFENHÄUSER) <br> * Gesamt * <br><br> ---- | | |

|  | RECHERCHIERTE SACHGEBIETE (Int. Cl.4) |
|---|---|
|  | B 29 C <br> B 29 D |

Der vorliegende Recherchenbericht wurde für alle Patentansprüche erstellt.

| Recherchenort | Abschlußdatum der Recherche | Prüfer |
|---|---|---|
| WIEN | 16-11-1987 | MAYER |